# EUROPEAN PATENT APPLICATION

(11) **EP 1 364 706 A1**
(43) Date of publication of application: **26.11.2003**
(21) Application number: 02705061.6
(22) Date of filing: 28.02.2002
(51) Int. Cl.: B01J 23/42, B01J 27/25, B01J 35/10, B01J 37/02, B01D 53/94, C01F 7/02

(54) **EXHAUST GAS PURIFYING CATALYST**

(30) Priority: 02.03.2001 JP 2001057994
(71) Applicant: KABUSHIKI KAISHA TOYOTA CHUO KENKYUSHO, Aichi-gun Aichi-ken, 480-11 (JP)
(72) Inventor: SAIKI, Motohisa, K.K.Toyota Chuo Kenkyusho, Aichi-gun, Aichi 480-1192 (JP); MATSUNAGA, Shinichi, K.K.Toyota Chuo KenKyusho, Aichi-gun, Aichi 480-1192 (JP); TSUJI, Ryusuke, K.K.Toyota Chuo Kenkyusho, Aichi-gun, Aichi 480-1192 (JP); SUDA, Akihiko, K.K.Toyota Chuo Kenkyusho, Aichi-gun, Aichi 480-1192 (JP)
(74) Representative: Blumbach, Kramer & Partner GbR
(86) International application number: JP0201891
(87) International publication number: WO02070127

(57) **Abstract**

This invention relates to a catalyst for exhaust gas purification, including a substrate, a coat layer comprised of a porous support body formed on the substrate, and a noble metal supported on the coat layer. In the coat layer, pore volume of pore having pore diameter 0.1 to 20 µm occupies 50 % or more, and pore volume of pore having pore diameter 0.5 to 10 µm occupies 20 % or more, respectively of a pore volume of pore having pore diameter 50 µm or less. The pore diameter of the coat layer is 10 to 2000 times that of the conventional coat layer. Gas diffuse speed in the pore of the present invention is 10 to 2000 times that of the conventional pore. On account of the noble metal supported at the inner part of the coat layer, particle growth of the noble metal is prevented, and utilize efficiency of the NOx storing material at the inner part is increased. Both increasing of NOx storing amount in the lean condition under oxygen excessive atmosphere, and reducing and purifying of NOx of high efficiency by the short time rich-spike can be realized.

## Description

### Technical Field

The present invention relates to a catalyst for exhaust gas purification which can effectively purify harmful components included in an exhaust gas. This catalyst for exhaust gas purification of the present invention is extremely useful as a NOx storage-reduction type catalyst used in an exhaust system of an burn system. In this burn system, air/fuel ratio is controlled so that the fuel burns usually under a lean atmosphere including excessive oxygen, and burns intermittently under a stoichiometric or rich atmosphere.

### Background Art

As the catalyst mounted onto the exhaust system of an automobile, an oxidize catalyst oxidizing HC and CO selectively, and a three-way catalyst oxidizing HC and CO and reducing NOx in the exhaust gas under stoichiometric atmosphere have been known. In these catalysts, noble metal such as Pt is supported on a porous oxide support body made of alumina, zeolite and so on. By the way, in lean burn where the fuel is burnt under lean atmosphere including excessive oxygen, due to oxygen excessive atmosphere of the exhaust gas, a normal three-way catalyst can hardly reduce and purify the NOx

In view of this, new burn system has been developed. Usually, the fuel is burned in the lean condition including excessive oxygen so that NOx exhausted from an engine is held into a NOx storing material. Intermittently, the lean burn condition is changed to stoichiometric or rich condition to make the exhaust gas to the reduce atmosphere where NOx held into the catalyst is reduced and purified. As the catalyst suitable for such system, a catalyst for exhaust gas purification which stores NOx in the lean atmosphere and emits the sorbed NOx in the stoichiometric or rich atmosphere has been developed

As the NOx storing material having such storing and emitting operation of NOx, an alkali earth metal, an alkali metal and a rare earth element have been known. For example, Japanese Patent Laid-open H5-317652 has proposed a NOx storage-reduction type catalyst in which the alkali earth metal such as Ba and Pt are supported on a porous support body made of alumina. In Japanese Patent Laid-open H6-317652, a NOx storage-reduction type catalyst in which the alkali metal such as K is supported on a porous support body made of alumina has been proposed. In Japanese Patent Laid-Open H5-168860, a NOx storage-reduction type catalyst in which the rare earth element such as La and Pt are supported on a porous support body made of alumina has been proposed.

With controlling air/fuel ratio so that it raises like a pulse from the lean area to the stoichiometric or rich area, the atmosphere of the exhaust gas can change under the lean atmosphere to that under the stoichiometric or rich atmosphere like a pulse.

In the lean condition, NOx is sorbed into the NOx storing material, and is emitted in the stoichiometric or rich area to react with the reduce component of HC and CO to be purified. Thus, even when the exhaust gas is discharged from the engine in the lean burn condition, NOx can be effectively purified. Also, HC and CO in the exhaust gas oxidized by the noble metal and consumed for reducing NOx can be effectively purified.

The exhaust gas is set in the stoichiometric or rich area like the pulse, by setting the air/fiel ratio in the stoichiometric or rich atmosphere. Changing of the air/fuel ratio like the pulse is called "strike a rich-spike".

In the conventional catalyst for exhaust gas purification, on the support body made of porous oxide such as γ -Al₂ O₃, the noble metal such as Pt is supported. In the catalyst mainly used, on the monolith substrate of the honeycomb shape a coat layer made of the porous oxide is formed, then the noble metal is attracted on or impregnated into the coat layer by a noble metal solution.

By the way, most of pore of the porous oxide such as γ -Al₂ O₃ has small pore diameter of 0.01 µm. For this reason, when the noble metal solution is used for impregnation, it hardly get into the pore. In addition, the noble metal having high attract property to the coat layer, is mainly supported on a surface of the coat layer.

When large amount of the noble metal is supported, the noble metal supported in proximity relation creates a particle growth in usage under high temperature.

On the other hand, NOx storing material of the NOx storage-reduction type catalyst supported by aqueous solution of acetate and nitrate has property to be supported from a surface to an inner part of the coat layer uniformly. However, since the noble metal is supported largely on the surface of the coat layer, and does not exist near to the NOx storing material in the coat layer. NOx storing material in the coat layer is hardly used for NOx storage.

In view of this, the coat layer is formed by catalyst powder in which the noble metal is supported in the porous oxide powder such as γ -Al₂ O₃ in advance, then the NOx storing material is supported onto the coat layer thus formed. In this catalyst, the NOx storing material in the coat layer can be effectively used.

Despite the noble metal is supported in the whole coat layer uniformly, because largely amount is supported on the surface of the porous oxide powder, the noble metal is not uniform if observed microscopically. Accordingly, problem of particle growth still remains. Due to uniform distribution in the coat layer, the noble metal at deeper portion where the react gas diffusion hardly reaches, cannot be used effectively.

In the conventional engine control system of the NOx storage-reduction reduce, the rich-spike continues for few seconds. Long time rich-spike creates increased amount of CO₂ to worsen fuel efficiency. Whereas, there exists limit to shorten the rich-spike time, because short rich-spike time makes sufficient reduce and purify of the sorbed NOx difficult. In summary, shorter rich-spike time is preferable to decrease created amount of CO₂, while longer rich-spike time is preferable to achieve sufficient reduce and purify of NOx, both of which are antinomy.

The present invention has been made by taking above circumstances into consideration, and has object to overcome the above both problems at the same time. One object is to increase NOx storing amount in the lean condition, and other object is to achieve effective high reducing and purifying of the sorbed NOx by the short time rich-spike. These object are realized by supporting (bearing) the noble metal into inner (deeper) portion of the coat layer easily and by diffusing the react gas of gas phase into deeper portion of the coat layer, to thereby increase reacting probability.

The catalyst for exhaust gas purification of the present invention is comprised of a substrate, a coat layer comprising a porous support body formed on the substrate, and a noble metal supported on the coat layer. It is featured by that (i) pore volume of the coat layer having pore (fine bore) of pore diameter 0.1 to 20 µm occupies 50 % or more, of the pore volume of the coat layer having the pore of pore diameter 50 µm or less, and (ii) pore volume of pore having pore diameter 0.5 to 10 µm occupies 20 % or more, of pore volume of pore having pore diameter 50 µm or less.

In this catalyst, the pore volume of the pore of pore diameter 10 to 20 µm occupying 20 % or more of the whole pore volume, is more preferable.

The catalyst is preferably the NOx storage-reduction type catalyst. In this type catalyst, the coat layer preferably includes the NOx storing material selected from the alkali metal, the alkali earth metal and rare earth element. This type catalyst is used in a burn system of exhaust system in which air/fuel ratio of mixed gas is controlled so that the fuel burns usually under the lean atmosphere including excessive oxygen, and to burns intermittently under stoichiometric or rich atmosphere.

Also, in the catalyst, the pore of pore diameter 0.1 to 20 µm is formed by mixing a surface-active agent into a slurry used to form the coat layer, forming the slurry with air bubble and then baking the substrate which is coated the slurry thereon.

### Brief Explanation of Drawing

Fig. 1 is a graph showing a saturate NOx storing amount of the catalyst of the embodiments 1 and 2, and comparative sample 1 after the rich-spike;
Fig. 2 is a graph showing a 60 sec. NOx storing amount of the catalyst of the embodiment 1 and comparative sample 1, after the rich-spike;
Fig. 3 is a graph showing a NOx storing ability of the catalyst of the embodiment 1 and comparative sample 1;
Fig. 4 is a drawing corresponding to the EPMA photograph showing Pt distribution of the coat layer in the catalyst of the embodiment 3;
Fig. 5 is drawing corresponding to the EPMA photograph showing Pt distribution of the coat layer in the catalyst of the embodiment 4; and
Fig. 6 is a drawing corresponding to the EPMA photograph showing Pt distribution of the coat layer in the catalyst of the comparative sample 2.

### Best Mode of Carrying out the Invention

Pore diameter 0.01 µm of the pore of the porous support body used in the conventional NOx storage-reduction type catalyst is extremely small. The coat layer is formed by support body powder finely filled. It is assumed, due to low gas diffuse property in the coat layer, the exhaust gas is not sufficiently diffused at inner part of the coat layer upon rich-spike.

In view of this, in the coat layer of the catalyst for exhaust gas purification of the present invention, (i) the pore volume of the pore having pore diameter 0.1 to 20 µm occupies 50 % or more, of the pore volume of pore having pore diameter 50 µm or less, and (ii) the pore volume of pore having pore diameter 0.5 to 10 µm occupies 20 % or more, of the pore volume of pore having pore diameter 50 µm or less.

In the area of coat layer where pore diameter of the pore is 0.0 1 to 20 µm, the coefficient of gas diffuse speed varies continuously, and varying amount is proportional to the pore diameter. In the coat layer of the present invention, since the pore volume of porehaving pore diameter 0.1 to 20 µm occupies 50 % or more of a pore volume of pore having pore diameter 50 µm or less, pore diameter is 10 to 2000 times of the conventional coat layer in which most of the pore has pore diameter 0.01 µm. As a result, gas diffuse speed in the pore of the present invention is 10 to 2000 times that of the conventional pore. Accordingly, even by the short time rich-spike, the exhaust gas can reach to the inner part of the coat layer, so that NOx sorbed in the NOx sorbed material at inner part of the coat layer can be reduced and purified.

Solution of the noble metal solution gets into the pore having pore diameter 10 to 20 µm sufficiently by the capillary phenomenon. In other words, even at the inner part of the coat layer, the noble metal is supported along an inner surface of pore. Uniform supporting of the noble metal from the surface to the inner part of the coat layer can suppress particle growth and can prevent decrease of contact area of the noble metal with the exhaust gas. Thus, purify activation after long time usage increases. Also, in the NOx storage-reduction type catalyst, approximity of the NOx storing material and the noble metal in the coat layer, not only increases the utilize efficiency of the NOx storage-reduction catalyst in the coat layer, but further increases the reduce efficiency of the NOx sorbed in the NOx storing material.

Summing up, the pore of pore diameter 10 to 20 µm provides the gas diffuse passage, and provides support area of the noble metal and the NOx storing material, which remarkably increase the contact probability between the exhaust gas and the catalyst component. Thus, in the catalyst for exhaust gas purification of the present invention the purify activation increases.

The NOx storage-reduction type catalyst can realize high NOx purify efficiency by short time rich-spike. Therefore, the catalyst for exhaust gas purification of the present invention can further shorten the rich-spike time, which results in increase of fuel efficiency (mileage) and further suppress of CO₂ emission.

When the pore volume of pore having pore diameter 0.1 to 20 µm occupies less than 50 % of the pore volume of pore having pore diameter 50 µm or less, and the pore volume of pore having pore diameter 0.5 to 10 µm occupies less than 20 % of a pore volume of pore having pore diameter 50 µm or less, the gas diffuse property lowers to lower NOx purifying ability upon rich-spike. If pore diameter of the pore becomes larger than 20 µm, physical strength of the coat layer is weakened to deteriorate durability.

When the pore volume of pore having pore diameter 10 to 20 µm occupies less than 20 % of the whole pore volume, support amount of the noble metal at the inner part of the coat layer lowers. This lowers utilize efficiency of the NOx storing material to lower NOx purifying ability thereof. For this reason, pore volume of the pore having pore diameter 10 to 20 µm is preferably 20% or more of the whole pore volume.

As material for the porous support body, alumina silica, zirconia, titania, silica-alumina and zeolite can be illustrated. One of them is used, or some of them are mixed or compounded. Among them, γ -Al₂ O₃ having high activation is preferable.

As the noble metal to be supported on the coat layer, plutinum (Pt), rhodium(Rh), palladium (Pd) and iridium (Ir) can be illustrated.

Among them, Pt having high activation is preferable. As the supporting amount of the noble metal, 0.1 to 10 gram per 1 liter catalyst is preferable. Supported amount smaller than this range causes deficient purify activation, while that larger than this range results in saturate effect as well as increased cost.

NOx storing material supported on the coat layer is at least one metal or element selected from the alkali metal, alkali earth metal and rare earth element. As the alkali metal lithium, sodium, potassium, rubidium, caesium, francium can be illustrated. As the alkali earth metal barium, berylium, magnesium, calcium, strontium can be illustrated. As the rare earth element, scandium, yttrirum, lanthanum, cerium, praseodymium, neodymium, dysprosium, ytterbium can be illustrated.

Support amount of the NOx storing material is preferably 0.01 to 1 mol per one liter of catalyst. If the support amount is smaller than this range, lowered NOx storing amount lowers the NOx purifying ability, while if it is larger than this range, the noble metal covered by the NOx storing material lowers activation thereof.

There is no limit for thickness of the coat layer, but generally 120 to 300 gram of coat material is adhered to 1 liter of the substrate. As material for the substrate on which the coat layer is formed, heat-resistant ceramics such as cordierite or metal are used. The substrate can have honeycomb shape and particle shape.

For forming the coat layer so that the pore volume of pore having pore diameter 0.1 to 20 µm occupies 50 % or more of a pore volume of pore having pore diameter 50 µm or less, and the pore volume of pore having pore diameter 0.5 to 10 µm occupies 20 % or more of the pore volume of pore having pore diameter 50 µm or less, after the surface activate agent is mixed, the slurry used for forming the coat layer is agitated to form an air bubble therein by trapping air. Then, the substrate coated by the slurry is baked.

Various surface activate agent which can form the air bubble in the slurry and can maintain the air bubble until baking, can be adopted. Anionic, cationic and nonionic surface activate agents can be illustrated.

Adding amount of the surface activate agent is determined by taking composition or viscosity of the slurry into consideration, and is preferably included in the slurry by 1 to 10 weight %. If the adding amount of the surface activate agent is smaller than 1 weight %, the surface activate agent can hardly show the above operation, the air bubble is hardly formed and the pore amount is decreased. If the adding amount is larger than 10 weight %, nature of the slurry is greatly changed so that coating becomes difficult and strength of the coat layer after coating is lowered.

For forming the air bubble in the slurry, the slurry is preferably agitated under the atmosphere after the surface activate agent is added. As the agitate time become longer, the bubble amount becomes larger. Since the bubble amount varies depending on composition, viscosity and agitate efficiency of the slurry, most preferable range can be determined through an experiment.

When the noble metal is supported on the coat layer, the noble metal is impregnated into the coat layer by the predetermined amount, by using solution of the solution such as complex of the noble metal, solution of solution such as nitrate. Water or organic solution such as an alcohol can be used as a solvent. Then, the coat layer is dried and baked. The noble metal is supported on the surface of the coat layer by attracting. Also, the solution impregnates into the pore opened on the coat layer surface and having pore diameter of 0.1 to 20 µm, so that the noble metal is supported along an inner surface of the pore.

The NOx storing material is supported on the coat layer in the same manner as the above noble metal by usage of solution of acetate, dihydrochloride or nitrate of the NOx material. Water or organic solution such as an alcohol can be used as a solvent. On account of week attract property to the support body, NOx storing material can be supported from the surface to the inner part of the coat layer uniformly, regardless of supporting manner.

In summary, according to the catalyst for exhaust gas purification of this invention, because the noble metal can be supported into the inner part of the coat layer and the gas diffuse property is increased, the contact probability of the noble metal supported at the inner part with the gas becomes high to increase the purify activation. Also, the NOx storage-reduction type catalyst shows high NOx storing ability, and has increased reducing ability of NOx upon rich-spike.

Provided that the NOx storage-reduction type catalyst has the purifying ability equivalent to that of the conventional catalyst, the rich-spike time can be shortened, so that CO₂ creation is suppressed, and the fuel efficiency improves.

### Embodiment of the Invention

Hereinafter, embodiments and comparative samples of the present invention will be explained.

### (Embodiment 1)

Mixed powder of 100 weight part in which γ -Al₂ O₃ powder of 50 weight part, TiO₂ powder of 50 weight part, ZrO ₂ powder of 25 weight part and CeO₂ powder of 10 weight part are mixed, alumina sol (alumina 40 weight %) of 65 weight part, and water of 190 weight part are mixed. Further, imidazolebetainsodium is mixed as the surface activate agent so that solid portion occupies 3 weight % of mixture. The mixture is agitated by propeller agitator under the atmosphere for 1 minute to form the air bubble in the slurry.

A honeycomb substrate (capacity: 35 cc) made of cordierite is dipped into the slurry and pulled out therefrom. After spraying off the surplus slurry, the substrate is baked in 500 °C for 1 hour under the atmosphere, to form the coat layer. The coat layer of 270 gram is formed per the honeycomb substrate of 1 liter.

A central pore diameter of the coat layer and a pore volume are measured by mercury polosi meter to calculate (i) rate of the pore volume of pore having pore diameter 0.1 to 20 µm to the pore volume of pore having pore diameter 50 % or less, and (ii)rate of pore volume of pore having pore diameter 0.5 to 10 µm to the pore volume of porehaving pore diameter 50 % or less, are measured. Calculated results are shown in Table 1.

The honeycomb substrate coated by the coat layer is then dipped into plutinum nitrate solution of the predetermined concentration, and pulled out therefrom. After sprayed off the surplus liquidlet, the substrate is dried in 300 °C for 15 min., and baked in 500 °C for 30 min. to support Pt thereon. The honeycomb substrate is then dipped into rhodium nitrate solution of the predetermined concentration, and pulled out therefrom. After sprayed off the surplus liquidlet, the substrate is dried in 300 °C for 15 min., and baked in 500 °C for 30 min. to support Rh thereon. Supported amount of Pt and Rh are respectively 2 gram and 0.5 gram per the honeycomb substrate of 1 liter.

Then the substrate is dipped into barium acetate solution of predetermined concentration to absorb the solution, and dried in 250 °C for 15 min., and baked in 500 °C for 30 min. to support Ba thereon. Then, the substrate is dipped into ammonium bicarbonate solution of 15g/l concentration for 15 min., and dried in 250 °C for 15 min. to change Ba to the barium carbonate. Support amount of Ba is 0.2 mol per the honeycomb substrate of 1 liter.

Further, by using the potasium nitrate solution and lithium nitrate solution, K and Li are supported respectively by 0.1 mol per the honeycomb substrate of 1 liter.

### (Embodiment 2)

In the slurry the air bubble is formed in the same manner as the above embodiment 1, except that adding amount of the surface activate agent is 1.5 weight %. Then the honeycomb substrate is dipped into the slurry to form the coat layer thereon. Central pore diameter and the pore distribution are measured, and measured results are shown in the Table 1. Then, each of the catalyst components same as the Embodiment 1 is supported on the coat layer.

### (Embodiment 3)

The catalyst for exhaust gas purification of the Embodiment 3 differs from that of the embodiment 1, only Pt being supported as the noble metal, and Rh, Ba, Li and K being not supported.

### (Embodiment 4)

The catalyst for exhaust gas purification of the Embodiment 4 differs from that of the embodiment 2, only Pt being supported as the noble metal, and Rh, Ba, Li and K being not supported.

### (Comparative Sample 1)

The slurry is formed in the same manner as the above embodiment 1, except that the surface activate agent is not added. Then the honeycomb substrate is dipped into the slurry to form the coat layer thereon. Central pore diameter and the pore distribution are measured, and measured results are shown in the Table 1. Then, each of the catalyst components same as the embodiment 1 is supported on the coat layer. In the coat layer, many pores of pore diameter 0. 01 µm are existed.

### (Comparative Sample 2)

The catalyst for exhaust gas purification of the Comparative Sample 2 differs from that of the comparative sample 1, only Pt being supported as the noble metal, and Rh, Ba, Li and K being not supported.

### (Experiment and Evaluation)

**Table 1**

| | amount of surface activate agent added (solid part wt. %) | central pore diameter | rate of pore of 0.1 to 20 µm | rate of pore of 0.5 to 10 µm |
|---|---|---|---|---|
| emb. 1 | 3 | 0.5 | 52 | 25 |
| emb. 2 | 1.5 | 0.5 | 51 | 22 |
| com. 1 | - | 0.01 | 39 | 15 |

The Table 1 shows, by adding of the surface activate agent, (i) the central pore diameter belongs in range of 0.1 to 20 µm, (ii) rate of the pore volume of pore diameter 0.1 to 20 µm relative to that of honeycomb diameter 50 µm or less is 50 % or more, and (iii) rate of the pore volume of pore diameter 0.5 to 10 µm relative to that of honeycomb diameter 50 µm or less is 20 % or more.

Next, the catalyst of the embodiments 1 and 2, and the comparative sample 1 are set in the evaluate apparatus, and are subjected to a heat treatment under condition described in the Table 2.

In flow-in gas temperature of 600 °C, the rich gas and lean gas are alternately flown for 2 and half min. interval for 5 hours.

**Table 2**

| | CO % | H₂ % | C₃ H₆ ppmC | NO ppm | O₂ | CO₂ | SO₂ ppm | N₂ |
|---|---|---|---|---|---|---|---|---|
| rich | 4.00 | 1.3 | 1800 | 1500 | 0.17 | 8.7 | 800 | balance |
| lean | 0.09 | - | 1800 | 1500 | 6.60 | 8.7 | 800 | balance |

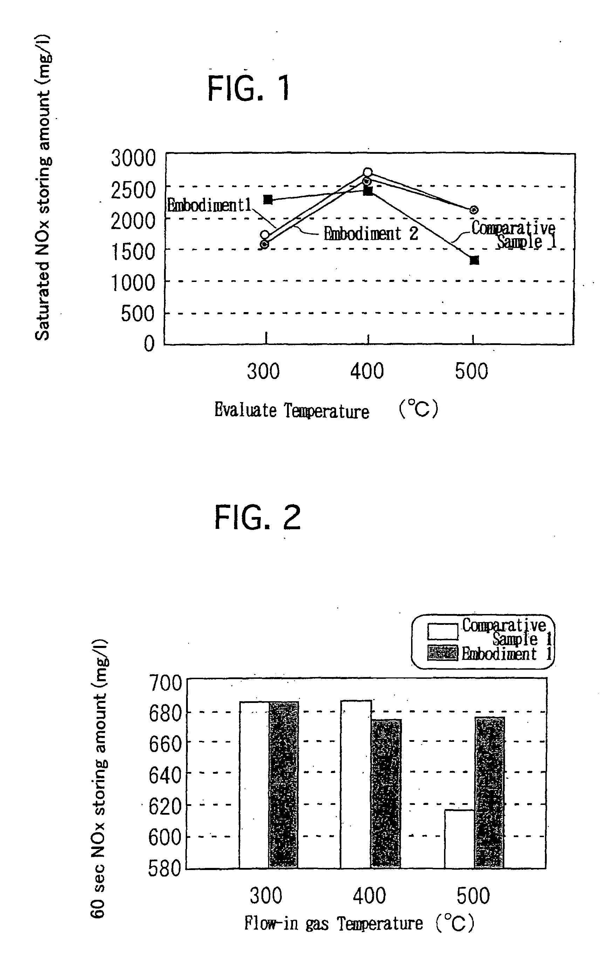

For each of the catalyst subjected to the heat treatment, the rich gas which contains components described in the Table 3 is flown for 10 min. Then, the lean gas is flown for each catalyst until sorbed NOx saturates. Then, the rich-spike is stricken for 3 sec. NOx storing amount for 60 sec. after changing the rich gas to the lean gas, and saturated NOx storing amount are measured. 60 sec. NOx storing amount and saturated NOx storing amount for the flow-in gas temperature of 500 °C, 400 °C and 350°C are measured. Result of the saturated NOx storing amount and 60 sec. NOx storing amount are respectively shown in Fig. 1 and 2.

**Table 3**

| | CO % | H₂ % | C₃ H₆ ppmC | NO ppm | O₂ | CO₂ | H₂ O % | N₂ |
|---|---|---|---|---|---|---|---|---|
| rich | 1.05 | 0.35 | 2000 | - | 0.25 | 10.5 | 5.0 | balance |
| lean rich- | 0.01 | - | 600 | 400 | 7.00 | 11.0 | 5.0 | balance |
| spike | 6.00 | 1.60 | 3200 | 400 | - | 11.0 | 5.0 | balance |

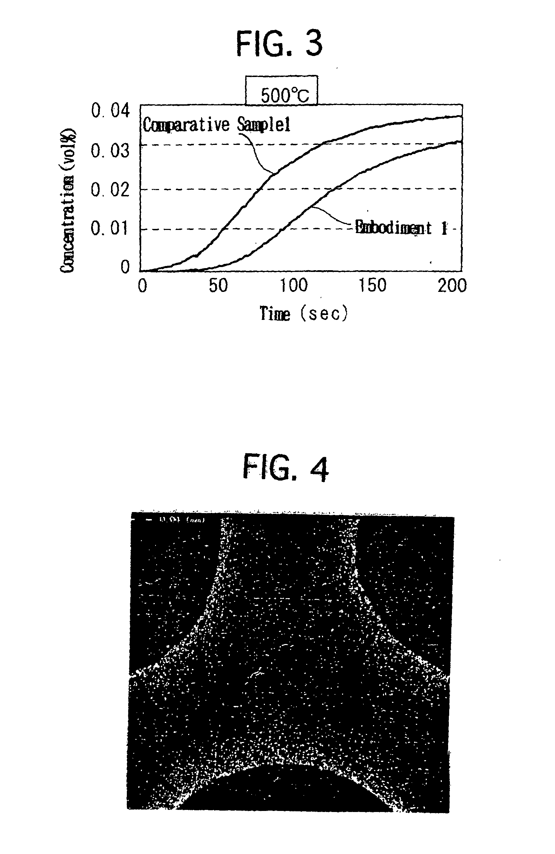

For the catalysts of the embodiment 1 and the Comparative Sample 1, the gas is changed to the lean gas after rich-spike, then NOx concentration in the flow-out gas is continuously measured as lapse of the time. Thus, a NOx storing curve is formed. Measure conditions are 500 °C of flow-in gas temperature, and 50 l/m (SV=86.000 hr⁻¹) of the gas flow amount. Results are shown in Fig. 3.

As apparent from Figs. 1 and 2, the catalysts of embodiments I and 2 show larger saturated NOx storing amount than the catalyst of the comparative sample 1, in 400 to 500 °C. The NOx storing amount in 5 00 °C for 60 sec. is especially large. Despite same NOx storing capacity between each catalyst of the embodiments 1 and 2 and the comparative sample 1, the NOx storing amount are different. It is assumed that the catalysts of the embodiments 1 and 2 have sufficiently reduced the sorbed NOx upon the rich-spike, while the catalyst of the comparative sample 1 has not reduced the sorbed NOx sufficiently in the short rich-spike.

Fig. 3 shows, in the catalyst of the embodiment 1, NOx is not emitted for 40 sec. after the exhaust gas changed to the lean gas. This means NOx is completely sorbed in the catalyst. To the contrary, in the catalyst of the comparative sample 1, NOx concentration becomes high just after changed to the lean gas. Despite same NOx storing capacity between the catalyst of the embodiment 1 and the comparative sample 1, the NOx concentration are different. It is assumed that the catalyst of the comparative sample 1 has not sorbed NOx sufficiently due to slow rate of NOx storing, while the catalyst of the embodiments 1 has sorbed NOx quickly. Thus, the catalyst of the embodiment 1, having the pore of large pore diameter sufficiently, is excellent in gas diffuse property.

The initial NOx storing rate is calculated based on Fig. 3. The NOx storing rate is 0.006 mmol/sec. for the catalyst of the embodiment 1, and 0.003 mmol/sec. for the catalyst of the comparative sample 1. The catalyst of the embodiment 1 has sorbed NOx twice as much rate as the catalyst of the comparative sample.

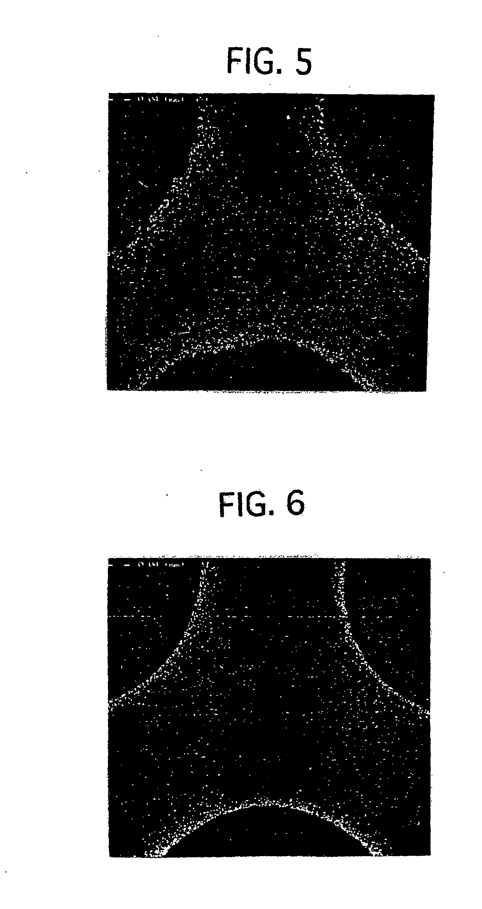

In the catalysts of the embodiments 3 and 4, and the comparative sample 2, the Pt distribute condition of cross section of the coat layer is analyzed by the EPMA analysis. Results are shown in Figs. 4 to 6. In Figs. 4 to 6, portions observed white show areas where Pt exists. Pt being supported on only the coat layer surface in the catalyst of the comparative sample 2, and Pt being supported not only the coat layer surface, but into the inner part of the coat layer in the catalyst of each embodiment, can be observed.

The reason can be assumed as follow. The catalysts of each embodiment have the pore having pore diameter of 0.1 to 20 µm in the coat layer. The plutinum nitrate solution impregnated in the pore, so that Pt is supported even into of the coat layer along the inner surface of the pore.

Thus, in the catalysts of each embodiment, on account of the catalyst reaction by Pt even at inner part of the coat layer and increase of gas diffuse property, the NOx storing amount increases after rich-spike, as shown in Figs. 1 and 2, to realize large NOx storing rate.

## Claims

1. A catalyst for exhaust gas purification, including a substrate, a coat layer comprised of a porous support body formed on the substrate, and a noble metal supported on the coat layer, comprising:
in the coat layer, a pore volume of pore having pore diameter 0. 1 to 20 µm occupies 50 % or more of a pore volume of pore having pore diameter 50 µm or less; and
a pore volume of pore having pore diameter 0.5 to 10 µm occupies 20 % or more of pore volume of pore having pore diameter 50 µm or less.

2. A catalyst for exhaust gas purification according to claim 1, wherein the pore having pore diameter 10 to 20 µm occupies 20 % or more of whole pore volume.

3. A catalyst for exhaust gas purification according to claim 1, wherein the catalyst is a NOx storage-reduction type catalyst including a NOx storing material selected from alkali metal, alkali earth metal and rare earth element, and being used in a burn system of exhaust system in which air/fuel ratio is controlled so that the fuel burns usually under a lean atmosphere including excessive oxygen, and burns intermittently under a stoichiometric or rich atmosphere.

4. A catalyst for exhaust gas purification according to claim 3, wherein the pore having pore diameter 10 to 20 µm occupies 20 % or more of a whole pore volume.

5. A catalyst for exhaust gas purification according to claim 1, wherein the pore of pore diameter 0.1 to 20 µm is formed by mixing a surface-active agent into a slurry used to form the coat layer, and then baking the substrate coated the slurry thereon.

6. A catalyst for exhaust gas purification according to claim 5, wherein the surface activate agent is included in the slurry by 1 to 10 weight %.
